# FASCICULE DE BREVET EUROPEEN

(11) **EP 4 255 779 B1**
(45) Date de publication et mention de la délivrance du brevet: **09.10.2024**
(21) Numéro de dépôt: 21830717.1
(22) Date de dépôt: 30.11.2021
(51) Int. Cl.: B60S 13/00, B65G 67/02, B66F 5/00, B66F 7/24, B66F 9/06, B66F 9/18

(54) **PROCÉDÉ DE CHARGEMENT D'UN VÉHICULE À QUATRE ROUES ET CONVOYEUR DE TRANSPORT ASSOCIÉ**
VERFAHREN ZUM BELADEN EINES VIERRÄDRIGEN FAHRZEUGS UND ZUGEHÖRIGER TRANSPORTFÖRDERER
METHOD FOR LOADING A FOUR-WHEELED VEHICLE AND ASSOCIATED TRANSPORT CONVEYOR

(30) Priorité: 02.12.2020 FR 2012512
(43) Date de publication de la demande: 11.10.2023
(73) Titulaire: Stanley Robotics, 75011 Paris (FR)
(72) Inventeur: CORD, Aurélien, 75014 PARIS (FR); TROUBLE, Anthony, 92370 CHAVILLE (FR); RAVASI, Thomas, 93330 NEUILLY-SUR-MARNE (FR); DALLEN, Louis-Marie, 75015 PARIS (FR)
(74) Mandataire: IP Trust
(86) Numéro de dépôt international: PCT/FR2021/052144
(87) Numéro de publication internationale: WO 2022/117945

(56) Documents cités:
- DE-U1- 202004 018 058
- FR-A1- 3 090 541

## Description

### Domaine de l'invention

La présente invention concerne le domaine des véhicules électriques de manutention, en particulier des convoyeurs de transport ou de déplacement de véhicules à quatre roues.

### État de la technique

Dans l'état de la technique, il est connu d'utiliser des convoyeurs de transport électriques pour déplacer ou transporter des véhicules automobiles, en particulier des véhicules neufs, sur des aires de stationnement.

Or si le frein de parking d'un véhicule n'est pas actionné, ledit véhicule pourrait rouler de manière involontaire dans une pente après un déplacement via un convoyeur. Dans le pire des cas, ledit véhicule pourrait heurter d'autres véhicules stockés et occasionner des dommages. Il serait en outre désireux de proposer une solution autorisant une tolérance dans le positionnement, selon les trois dimensions, du convoyeur relativement au véhicule à transporter ou à déplacer.

DE 20 2004 018058 U1 divulgue un procédé similaire au préambule de la revendication 1, et un convoyeur similaire au convoyeur du préambule de la revendication 7.

### Solution apportée par l'invention

La présente invention concerne selon son acceptation la plus générale un procédé de chargement d'un véhicule à quatre roues à l'aide d'un convoyeur de transport comprenant des bras de calage, agencés pour se positionner de part et d'autre de la bande de roulement d'une roue du véhicule à charger, et des moyens de détection de présence ou de serrage de roue, le procédé comprenant les étapes suivantes :
- une étape de déplacement du convoyeur jusqu'au contact d'un bras calage avec une bande roulement d'un pneu,
- une étape de déplacement du convoyeur selon l'axe longitudinal du convoyeur d'une distance prédéterminée ou jusqu'à la détection d'un effort prédéterminé,
- une étape d'arrêt du déplacement du convoyeur et génération d'un signal représentatif de l'état de mobilité dudit véhicule : mobile ou immobile.

La vérification de l'état d'actionnement du frein de parking du véhicule à charger ou à déplacer est ainsi simple et rapide tout en permettant une tolérance de plusieurs degrés par rapport à l'axe longitudinal du véhicule.

Selon une première variante, l'étape d'arrêt du déplacement du convoyeur et de génération d'un signal représentatif de l'état de mobilité dudit véhicule est réalisée en fonction de la variation temporelle d'un effort détecté. L'effort prédéterminé est par exemple un effort correspondant à une augmentation d'au moins 30% de l'effort détecté lors du contact d'un bras de calage avec une bande de roulement. Dans le cas de l'annulation de l'effort détecté après ladite étape d'arrêt du déplacement du convoyeur, le chargement du véhicule est interrompu.

Selon une deuxième variante, l'étape d'arrêt du déplacement du convoyeur et de génération d'un signal représentatif de l'état de mobilité dudit véhicule est réalisée en fonction de la variation temporelle d'une distance détectée. Dans le cas de l'augmentation de la distance détectée après ladite étape d'arrêt du déplacement du convoyeur, le chargement du véhicule est interrompu.

Dans le cas d'une interruption de chargement, il est prévu l'émission d'un message.

La présente invention, selon un deuxième aspect, concerne un convoyeur de transport pour le chargement de véhicules à quatre roues, comprenant un châssis télescopique comprenant des bras de calage agencés pour se positionner de part et d'autre de la bande de roulement d'une roue du véhicule à charger, caractérisé en ce qu'il comprend des moyens de détection de présence ou de serrage de roue de véhicule comprenant au moins un capteur et un calculateur de détection de présence ou de serrage collectant les données de l'au moins un capteur et générant un signal représentatif de l'état de mobilité dudit véhicule en fonction desdites données.

De préférence, le convoyeur de transport est du type comprenant un châssis télescopique dans une direction longitudinale, le châssis comprenant une poutre principale et une poutre secondaire mobile relativement à la poutre principale, chaque poutre comprenant un longeron s'étendant transversalement et de part et d'autre de ladite poutre, chaque longeron présentant une paire de bras articulés audit longeron, chaque bras étant relié à une extrémité d'un longeron. Les bras sont mobiles entre une position dans laquelle ils permettent le déplacement dudit châssis sous le véhicule, et une position dans laquelle ils viennent en contact avec les bandes de roulement desdites roues. Chaque bras est articulé selon un axe de pivotement pour permettre un déplacement entre une position perpendiculaire à l'axe longitudinal du châssis et une position repliée pour occuper une largeur inférieure à la distance comprise entre les flancs intérieurs des roues du véhicule. En position perpendiculaire, dite aussi position dépliée, la longueur de l'ensemble comprenant la paire de bras et un longeron est au moins égale à la voie du véhicule à charger ou à déplacer.

La hauteur du châssis, comprenant des éléments qu'il supporte, et pour la partie destinée à être engagée sous le véhicule à transporter, est déterminée pour être inférieure à la garde au sol du véhicule.

Selon une variante de réalisation du châssis du convoyeur, ladite paire de bras articulée est mobile transversalement.

Selon un premier mode de réalisation des moyens de détection de présence ou de serrage, ceux-ci comprennent des moyens de détection de la position d'une roue. Par exemple, les moyens de détection de la position d'une roue sont des capteurs télémétriques laser, à ultrasons ou radar. Selon une variante de réalisation, les moyens de détection de présence ou de serrage sont des moyens de détection de contact. Par exemple, les moyens de détection de contact comprennent au moins un ressort.

Selon un deuxième mode de réalisation des moyens de détection de présence ou de serrage, ceux-ci comprennent des moyens de détection d'un effort. Par exemple, les moyens de détection d'un effort sont des capteurs d'effort du type jauge de déformation ou sonde de pression, ou encore par l'interprétation d'un signal indirect, tel que, par exemple, l'augmentation de la consommation électrique du moteur du vérin de serrage.

De préférence, les moyens de détection de présence ou de serrage sont disposés sur les bras de calage.

De manière complémentaire ou selon un autre mode de réalisation, les moyens de détection de serrage sont disposés sur les axes de pivotement des bras de calage.

En lien avec le précédent mode de réalisation, les moyens de détection d'un effort comprennent un capteur de couple et/ou un capteur mesurant l'intensité du ou des actionneurs électriques actionnant le ou les bras de calage.

### Description des figures

La présente invention sera mieux comprise à la lecture de la description qui suit, se référant à un exemple non limitatif de réalisation illustré par les dessins annexés où
[fig. 1] la figure 1 représente une vue schématique en perspective d'un convoyeur selon un premier exemple de réalisation de l'invention, ledit convoyeur comprenant deux paires de bras avants de calage et une paire de bras arrières de calage ;
[fig.2] la figure 2 représente une vue schématique en perspective d'un convoyeur conforme à la figure 1 en phase d'approche devant un véhicule automobile ;
[fig.3] la figure 3 représente une vue schématique en perspective d'un convoyeur en phase d'approche lors de laquelle le châssis du convoyeur se situe en partie sous un véhicule automobile, et les bras arrières de calage étant en position repliée ;
[fig.4] la figure 4 représente une vue d'un convoyeur conforme à la figure 3, les bras arrières de calage étant en position dépliée ;
[fig.5] la figure 5 représente une vue schématique en perspective d'un convoyeur en phase d'approche lors de laquelle le châssis du convoyeur se situe sous un véhicule automobile, et les bras avant de calage étant en contact avec les bandes de roulement des roues avant du véhicule automobile ;
[fig.6] la figure 6 représente une vue d'un convoyeur conforme à la figure 5, les bras arrières de calage étant en contact avec les bandes de roulement des roues arrières du véhicule automobile ;
[fig.7] la figure 7 représente une vue d'un convoyeur conforme à la figure 6, le véhicule automobile étant chargé sur le convoyeur de transport ;
[fig.8] la figure 8 représente une vue schématique de dessus d'un convoyeur selon un deuxième exemple de réalisation de l'invention, ledit convoyeur comprenant deux paires de bras avant de calage et deux paires de bras arrière de calage ;
[fig.9] la figure 9 représente une vue schématique de dessus d'un convoyeur conforme à la figure 8 en phase d'approche devant un véhicule automobile dont seules les roues sont représentées ;
[fig. 10] la figure 10 représente une vue schématique de dessus d'un convoyeur conforme à la figure 8, les bras arrières de calage étant en contact avec les bandes de roulement des roues arrières du véhicule automobile, les bras distaux de calage étant en position repliée ;
[fig. 11] la figure 11 représente une vue schématique de dessus d'un convoyeur conforme à la figure 8, tous les bras de calage étant en contact avec les roues du véhicule automobile à charger.

### Description d'un mode de réalisation

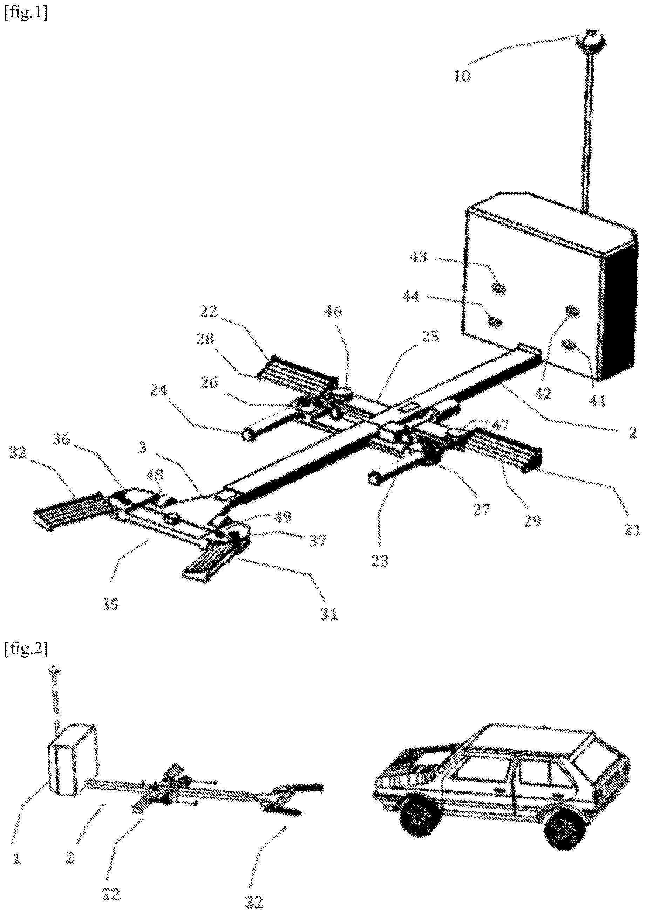

La figure 1 représente une vue en perspective d'un premier mode de réalisation d'un convoyeur. Le convoyeur comprend un châssis comprenant une poutre principale 2 et une poutre secondaire 3 montée en coulissement à l'intérieur de la poutre principale 2. Un vérin ou un actionneur linéaire (non représenté), par exemple à vis sans fin, permet d'actionner la poutre secondaire 3 relativement à la poutre principale 2 afin d'obtenir un châssis télescopique.

La poutre principale 2 du châssis comprend un longeron transversal avant 25 qui est fixe et qui supporte deux bras fixes 21, 22, ainsi que deux bras avant escamotables 23, 24, mobiles en pivotement par rapport au longeron avant. Les bras avant escamotables 23, 24 sont actionnés par des vérins ou des moteurs électriques, pour se déplacer entre :
- une position d'effacement, dans laquelle les bras avant escamotables s'étendant de manière parallèle à la poutre principale pour permettre le roulage du convoyeur sous le véhicule à charger et sans toucher les roues dudit véhicule, et
- une position escamotée de verrouillage, pour permettre le contact avec les bandes de roulement des roues du véhicule.

En position escamotée, l'espacement entre chaque paire constituée d'un bras fixe et d'un bras escamotable en vis-à-vis 21, 23 et 22, 24 est déterminé de manière que ceux-ci viennent en contact avec les flancs avant et arrière du pneu du véhicule et pincent ledit pneu afin d'assurer l'élévation du véhicule. Pour faciliter cette élévation, les bras fixes 21, 22 présentent une rampe inclinée 28, 29.

Lorsque les bras avant escamotables 24, 23 sont en position escamotée de verrouillage, ils bloquent le déplacement du véhicule par rapport au convoyeur.

La poutre secondaire 3 du châssis comprend également un longeron transversal arrière 35 qui supporte deux bras arrière escamotables 31, 32 mobiles en pivotement par rapport au longeron arrière. Les bras arrière escamotables 31, 32 sont actionnés par des vérins ou des moteurs électriques, pour se déplacer entre :
- une position d'effacement, dans laquelle les bras arrière escamotables s'étendant de manière parallèle à la poutre secondaire pour permettre le roulage du convoyeur sous le véhicule à charger et sans toucher les roues dudit véhicule, et
- une position escamotée de verrouillage, pour permettre le contact avec les bandes de roulement des roues du véhicule.

La longueur L des longerons 25, 35, mesurée entre les axes de pivotement des bras avant escamotables 23, 24 et des bras arrière escamotables 31, 32 est inférieure à Vmin-Lmin, où : Vmin désigne la voie usuelle et minimale d'une voiture, typiquement 1600 millimètres, Lmin désigne la largeur usuelle du pneumatique d'une voiture, typiquement 220 millimètres.

La longueur L des longerons est donc typiquement inférieure à 1400 millimètres, et de préférence de l'ordre de 1200 millimètres.

La longueur des bras fixes 21, 22, des bras avant escamotables 23, 24 et des bras arrière escamotables 31, 32 est déterminée pour correspondre à la moitié de la largeur lmax correspondant à la largeur entre les flancs externes des roues d'une voiture de grande dimension moins la longueur du longeron 25, 35, typiquement 500 millimètres pour chacun des bras.

Le convoyeur peut ainsi être positionné dans l'axe du véhicule afin de permettre le passage du châssis du convoyeur sous le véhicule avec les bras de calage 23, 24, 31, 32 en position repliée, orientés sensiblement longitudinalement, jusqu'à ce que les rampes 28, 29 des bras fixes 21, 22 viennent en butée contre les roues avant du véhicule.

Les bras de calage escamotables 31, 32 sont ensuite déplacés pour venir en position transversale. La poutre secondaire du châssis est actionnée vers l'avant pour s'adapter à l'empattement de la voiture à charger et amener les bras de calage escamotables 31, 32 en contact avec les bandes de roulement arrière des roues du véhicule.

Les bras de calage 23,24 sont déployés pour faire monter les véhicules sur les bras fixes 21, 22.

Le convoyeur comporte quatre capteurs télémétriques à ultrasons 41 à 44 délivrant des signaux en fonction de la distance du pare-chocs du véhicule.

Le convoyeur comprend des moyens de détection de serrage de roue de véhicule comprenant au moins un capteur et un calculateur de détection de serrage collectant les données de l'au moins un capteur et générant un signal représentatif de l'état de mobilité dudit véhicule en fonction desdites données.

Selon un mode de réalisation et en référence à la figure 1, les moyens de détection de serrage comprennent deux capteurs de force 46, 47 destinés à la détection et à la validation de la prise de véhicule, et deux capteurs télémétriques laser 26, 27 de courte portée à balayage pour la détection des roues et des obstacles. Les quatre capteurs sont disposés sur le longeron avant 25.

En outre, les moyens de détection de présence de roue comprennent deux capteurs télémétriques laser 48, 49 de courte portée à balayage pour la détection des roues et des obstacles. Les deux capteurs télémétriques laser 48, 49 sont disposés sur le longeron arrière 35.

Selon des variantes de réalisation :
- des capteurs de force ou d'effort peuvent être disposés sur les deux longerons,
- des capteurs de détection de la position d'une roue peuvent être disposés sur un des deux longerons,
- un ou plusieurs desdits capteurs peuvent être disposés sur les bras de calage.

Le châssis formé par les poutres 2, 3 et les longerons 25, 35 présente des roulettes ou des galets pour permettre le roulage au sol.

Les figures 2 à 7 représentent des vues schématiques du véhicule et du convoyeur à des étapes successives de chargement.

Au départ, comme représenté en figure 2, le convoyeur vient se positionner devant la voiture qui est stationnée sur une place de dépôt et de manière sensiblement alignée par rapport audit véhicule. Les bras de calage mobiles 23, 24, 31, 32, 33, 34 sont en position repliée ou d'effacement.

Les télémètres laser courte portée 48, 49 détectent le premier train de roues du véhicule de manière à positionner le châssis du convoyeur par rapport au véhicule à charger.

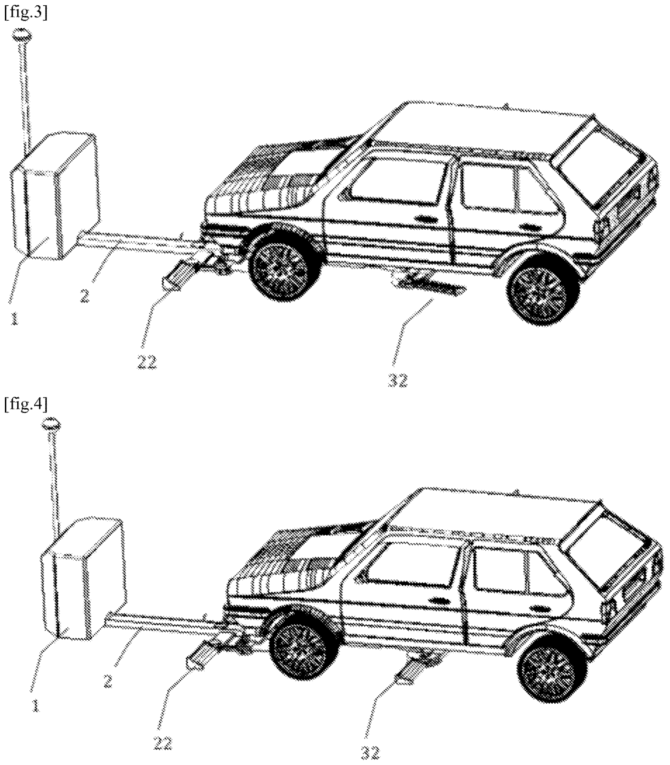

Ensuite le convoyeur roule pour placer la poutre secondaire, puis la poutre principale, sous le véhicule jusqu'à la détection des roues avant du véhicule par les télémètres laser courte portée 26, 27, voir figure 3.

A l'étape suivante (figure 4), les bras de calage arrière 31, 32 sont escamotés en position transversale. Dans le cadre d'un test de contrôle du bon verrouillage du frein de parking du véhicule, les bras de calage pourraient retenir le véhicule si le frein de parking n'était pas verrouillé.

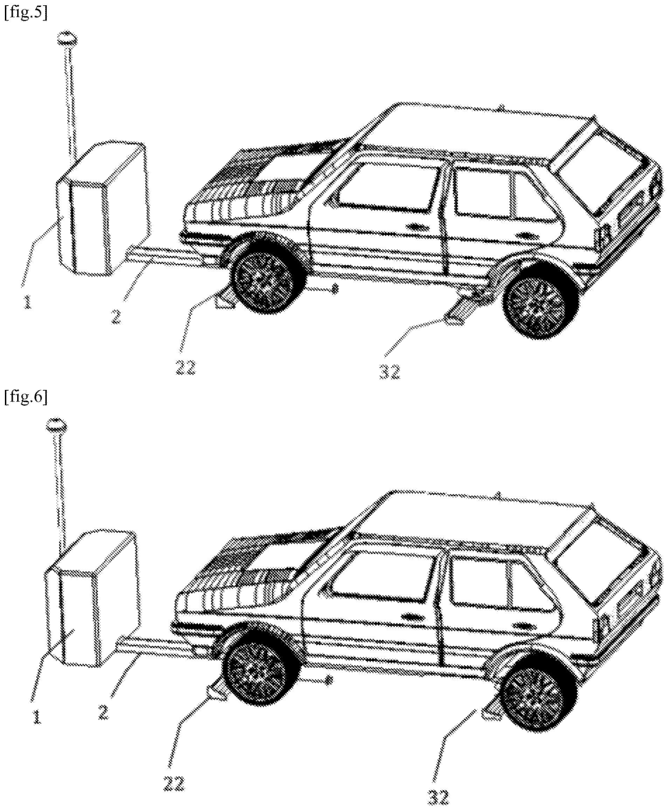

Le convoyeur avance ensuite jusqu'à ce que les bras fixes 21, 22 avant rentrent en contact avec les roues avant (voir figure 5). Les capteurs de force 46, 47 et les télémètres laser courte portée 26, 27 indiquent que les roues sont en contact. De plus, la poutre secondaire se déploie jusqu'à la détection des roues arrière du véhicule par les télémètres laser courte portée 48, 49.

Afin de détecter le bon serrage des roues, et donc le bon verrouillage du frein de parking, le convoyeur se déplace selon l'axe longitudinal du convoyeur de manière que les capteurs de force 46, 47 détectent un accroissement d'effort par rapport à l'effort détecté lors de la détection du contact avec les roues. Dès que cet effort est détecté, le déplacement du convoyeur est arrêté.

Si les capteurs de force 46, 47 détectent sensiblement le même effort accrue et/ou si les capteurs de position 26, 27 détectent toujours le contact avec les roues, alors le calculateur de détection de serrage indique que le frein de parking est bien verrouillé et la procédure de chargement se poursuit.

Si les capteurs de force 46, 47 détectent une diminution d'effort et/ou si les capteurs de position 26, 27 détectent un espacement avec les roues, en particulier un espacement qui s'accroît, alors le calculateur de détection de serrage indique que le frein de parking n'est pas verrouillé et la procédure de chargement est interrompu.

Si le frein de parking est bien verrouillé, le convoyeur ajuste ensuite (figure 6) la longueur de la poutre secondaire pour que les bras de calage arrière 31, 32 touchent les roues arrière. Dès que les bras avant escamotables 23, 24 serrent les roues avant le véhicule s'élève.

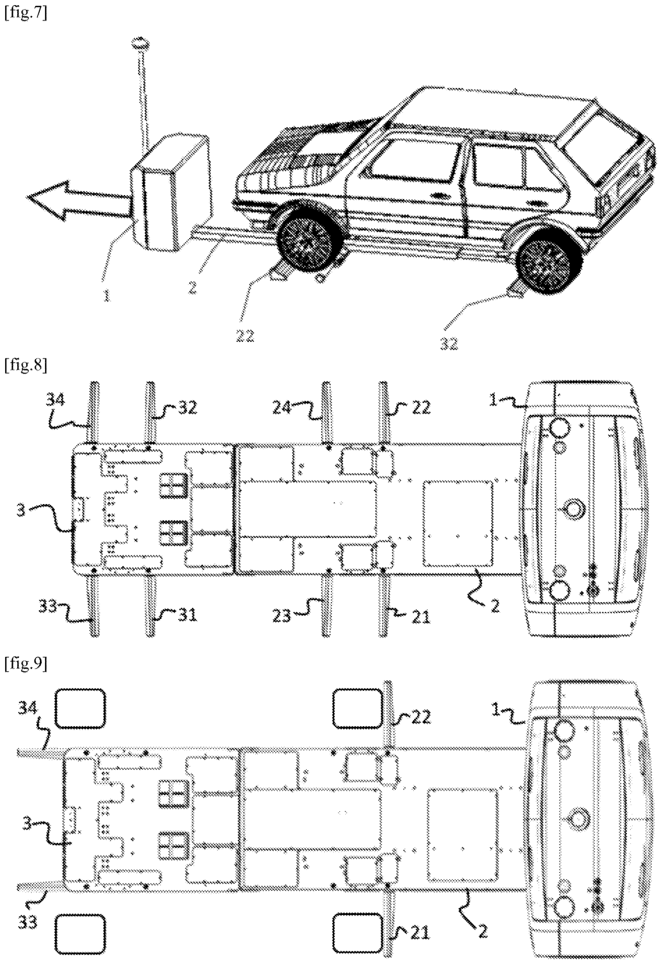

Les capteurs de force 48, 49 valident que le véhicule est monté sur les bras de calage fixes 21, 22, le convoyeur est déplacé automatiquement pour emmener le véhicule à l'emplacement cible, voir figure 7.

En référence aux figures 8, 9, 10 et 11, on va maintenant décrire un deuxième mode de réalisation d'un convoyeur qui sera décrit par ses différences par rapport au premier mode de réalisation.

La poutre secondaire 3 du châssis comprend en outre deux bras distaux escamotables 33, 34 mobiles en pivotement par rapport au longeron arrière. Les bras distaux escamotables 33, 34 sont actionnés par des vérins ou des moteurs électriques, pour se déplacer entre :
- en référence à la figure 9, une position d'effacement, dans laquelle les bras distaux 33, 34 escamotables s'étendant de manière parallèle à la poutre secondaire 3 pour permettre le roulage du convoyeur sous le véhicule à charger et sans toucher les roues dudit véhicule (les bras arrière escamotables étant en position repliée et non visible sur la figure 9), et
- une position escamotée de verrouillage, pour permettre le contact avec les bandes de roulement des roues du véhicule.

En position escamotée, l'espacement entre chaque paire de serrage constituée d'un bras arrière et d'un bras distal en vis-à-vis 31, 33 et 32, 34 est déterminé de manière que ceux-ci viennent en contact avec les flancs avant et arrière du pneu du véhicule et pincent ledit pneu afin d'assurer l'élévation du véhicule. Lorsque les bras distaux escamotables 34, 33 sont en position escamotée de verrouillage, ils bloquent le déplacement du véhicule par rapport au convoyeur.

En référence à la figure 9, le convoyeur s'est positionné sous une voiture et de manière sensiblement parallèle, la voiture étant représentée par quatre carrés illustrant les pneus de ladite voiture. Les bras de calage mobiles 23, 24, 31, 32, 33, 34 sont en position repliée ou d'effacement.

Les télémètres laser courte portée placés sur la poutre secondaire 3 détectent les roues avant du véhicule de manière à positionner le châssis du convoyeur par rapport au véhicule à charger, avant que les télémètres laser courte portée placés sur la poutre principale 2 détectent par la suite les roues avant du véhicule et jusqu'à ce que les bras fixes 21, 22 avant entrent en contact avec les roues avant (voir figure 9). Les capteurs de force et les télémètres laser courte portée, placés sur la poutre principale 2, indiquent que les roues sont en contact.

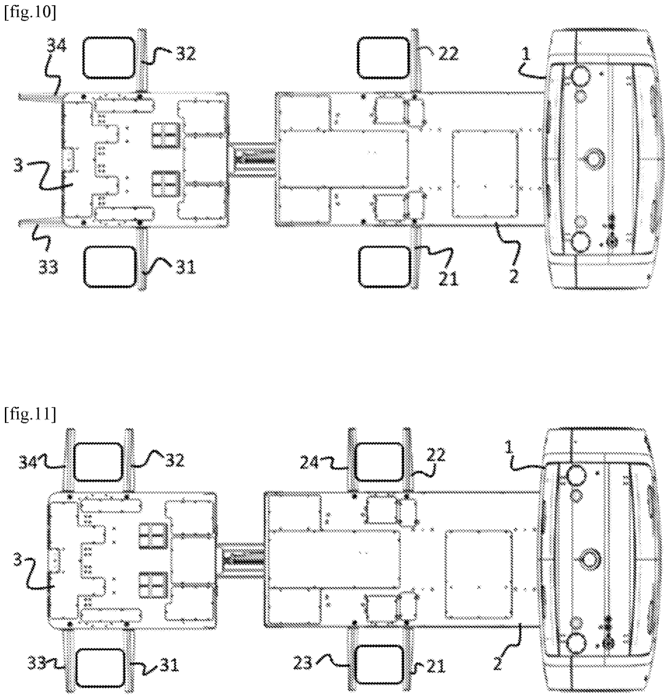

Ensuite en référence à la figure 10, la poutre secondaire 3 se déploie jusqu'à la détection des roues arrière du véhicule par les télémètres laser courte portée par ladite poutre 3. Les bras de calage arrière 31, 32 sont escamotés en position transversale.

Afin de détecter le bon serrage des roues, et donc le bon verrouillage du frein de parking, le convoyeur se déplace selon l'axe longitudinal du convoyeur de manière que les capteurs de force détectent un accroissement d'effort par rapport à l'effort détecté lors de la détection du contact avec les roues. Dès que cet effort est détecté, le déplacement du convoyeur est arrêté.

Si les capteurs de force détectent sensiblement le même effort accru et/ou si les capteurs de position détectent toujours le contact avec les roues, alors le calculateur de détection de serrage indique que le frein de parking est bien verrouillé et la procédure de chargement se poursuit.

Si les capteurs de force détectent une diminution d'effort et/ou si les capteurs de position détectent un espacement avec les roues, en particulier un espacement qui s'accroit, alors le calculateur de détection de serrage indique que le frein de parking n'est pas verrouillé et la procédure de chargement est interrompu.

Si le frein de parking est bien verrouillé, le convoyeur ajuste ensuite la longueur de la poutre secondaire.

Ensuite en référence à la figure 11, les bras de calage avant 23, 24 et les bras distaux de calage 33, 34 sont escamotés pour venir serrer les roues du véhicule avant de soulever ledit véhicule. Les capteurs de force valident que le véhicule est monté sur les bras de calage.

## Revendications

1. Procédé de chargement d'un véhicule à quatre roues à l'aide d'un convoyeur (90) de transport comprenant des bras de calage (21, 22, 23, 24, 31, 32, 33, 34), agencés pour se positionner de part et d'autre de la bande de roulement d'une roue du véhicule (100) à charger, et des moyens de détection (46, 47, 48, 49) de présence ou de serrage de roue, le procédé comprenant les étapes suivantes :
- une étape de déplacement du convoyeur (90) jusqu'au contact d'un bras calage (21, 22, 23, 24, 31, 32, 33, 34) avec une bande roulement d'un pneu,
- une étape de déplacement du convoyeur selon l'axe longitudinal du convoyeur d'une distance prédéterminée ou jusqu'à la détection d'un effort prédéterminé,
**caractérisé en ce que** le procédé comprend en outre :
- une étape d'arrêt du déplacement du convoyeur et génération d'un signal représentatif de l'état de mobilité dudit véhicule (100) : mobile ou immobile.

2. Procédé selon la revendication 1, au cours duquel l'étape d'arrêt du déplacement du convoyeur et de génération d'un signal représentatif de l'état de mobilité dudit véhicule est réalisée en fonction de la variation temporelle d'un effort détecté.

3. Procédé selon la revendication précédente, au cours duquel le chargement du véhicule est interrompu dans le cas de l'annulation de l'effort détecté après ladite étape d'arrêt du déplacement du convoyeur.

4. Procédé selon la revendication 1, au cours duquel l'étape d'arrêt du déplacement du convoyeur et de génération d'un signal représentatif de l'état de mobilité dudit véhicule est réalisée en fonction de la variation temporelle d'une distance détectée.

5. Procédé selon la revendication précédente, au cours duquel le chargement du véhicule est interrompu dans le cas de l'augmentation de la distance détectée après ladite étape d'arrêt du déplacement du convoyeur.

6. Procédé selon la revendication 3 ou 5, au cours duquel il est prévu l'émission d'un message dans le cas d'une interruption de chargement.

7. Convoyeur (90) de transport électrique pour le chargement de véhicules à quatre roues, comprenant un châssis télescopique (2, 3) comprenant des bras de calage (21, 22, 23, 24, 31, 32, 33, 34) agencés pour se positionner de part et d'autre de la bande de roulement d'une roue du véhicule (100) à charger,
**caractérisé en ce qu'**il comprend des moyens de détection de présence ou de serrage de roue de véhicule comprenant au moins un capteur (46, 47, 48, 49) et un calculateur de détection de présence ou de serrage collectant les données de l'au moins un capteur et générant un signal représentatif de l'état de mobilité dudit véhicule en fonction desdites données.

8. Convoyeur selon la revendication 7, dans lequel les moyens de détection de présence ou de serrage comprennent des moyens de détection de la position d'une roue.

9. Convoyeur selon la revendication 7, dans lequel les moyens de détection de présence ou de serrage comprennent des moyens de détection d'un effort.

10. Convoyeur selon l'une des revendications 7 à 9, dans lequel les moyens de détection de présence ou de serrage sont disposés sur les bras de calage.

## Patentansprüche

1. Verfahren zum Beladen eines vierrädrigen Fahrzeugs mittels eines Transportförderers (90), umfassend Feststellarme (21, 22, 23, 24, 31, 32, 33, 34), die zum Einnehmen einer Position auf beiden Seiten der Lauffläche eines Rades des zu beladenden Fahrzeugs (100) angeordnet sind, und Mittel (46, 47, 48, 49) zum Erkennen eines Vorhandenseins oder Einklemmen eines Rades, das Verfahren umfassend die folgenden Schritte:
- einen Schritt zum Bewegen des Förderers (90), bis ein Feststellarm (21, 22, 23, 24, 31, 32, 33, 34) mit einer Lauffläche eines Reifens in Kontakt kommt,
- einen Schritt zum Bewegen des Förderers entlang der Längsachse des Förderers um eine zuvor bestimmte Distanz oder bis zu dem Erkennen einer zuvor bestimmten Kraft,
**dadurch gekennzeichnet, dass** das Verfahren ferner umfasst:
- einen Schritt zum Anhalten des Bewegens des Förderers und zum Erzeugen eines Signals, das den Verschiebbarkeitszustand des Fahrzeugs (100) darstellt: verschiebbar oder feststehend.

2. Verfahren nach Anspruch 1, im Laufe dessen der Schritt zum Anhalten des Bewegens des Förderers und zum Erzeugen eines Signals, das den Verschiebbarkeitszustand des Fahrzeugs darstellt, in Abhängigkeit von der zeitlichen Änderung einer erkannten Kraft ausgeführt wird.

3. Verfahren nach dem vorstehenden Anspruch, im Laufe dessen das Beladen des Fahrzeugs im Falle der Aufhebung der Kraft, die nach dem Schritt zum Anhalten des Bewegens des Förderers erkannt wird, unterbrochen wird.

4. Verfahren nach Anspruch 1, im Laufe dessen der Schritt zum Anhalten des Bewegens des Förderers und zum Erzeugen eines Signals, das den Verschiebbarkeitszustand des Fahrzeugs darstellt, in Abhängigkeit von der zeitlichen Änderung einer erkannten Distanz ausgeführt wird.

5. Verfahren nach dem vorstehenden Anspruch, im Laufe dessen das Beladen des Fahrzeugs im Falle der Vergrößerung der Distanz, die nach dem Schritt zum Anhalten des Bewegens des Förderers erkannt wird, unterbrochen wird.

6. Verfahren nach Anspruch 3 oder 5, im Laufe dessen die Übermittlung einer Nachricht im Falle eines Unterbrechens des Beladens vorgesehen ist.

7. Elektrischer Transportförderer (90) zum Beladen von vierrädrigen Fahrzeugen, umfassend ein ausziehbares Fahrgestell (2, 3), umfassend Feststellarme (21, 22, 23, 24, 31, 32, 33, 34), die zum Einnehmen einer Position auf beiden Seiten der Lauffläche eines Rades des zu beladenden Fahrzeugs (100) angeordnet sind,
**dadurch gekennzeichnet, dass** er Mittel zum Erkennen des Vorhandenseins oder Einklemmen eines Fahrzeugrads umfasst, umfassend mindestens einen Sensor (46, 47, 48, 49) und einen Rechner zum Erkennen des Vorhandenseins oder Einklemmen, der die Daten des mindestens einen Sensors sammelt und ein Signal, das den Verschiebbarkeitszustand des Fahrzeugs in Abhängigkeit der Daten darstellt, erzeugt.

8. Förderer nach Anspruch 7, im Laufe dessen die Mittel zum Erkennen des Vorhandenseins oder Einklemmen Mittel zum Erkennen der Position eines Rads umfassen.

9. Förderer nach Anspruch 7, im Laufe dessen die Mittel zum Erkennen des Vorhandenseins oder Einklemmen Krafterkennungsmittel umfassen.

10. Förderer nach einem der Ansprüche 7 bis 9, im Laufe dessen die Mittel zum Erkennen des Vorhandenseins oder Einklemmen an den Feststellarmen eingerichtet sind.

## Claims

1. Method for loading a four-wheeled vehicle using a transporter (90) comprising wedging arms (21, 22, 23, 24, 31, 32, 33, 34) that are arranged so as to be positioned on either side of the tread of a wheel of the vehicle (100) to be loaded, and means (46, 47, 48, 49) for detecting the presence or clamping of a wheel, the method comprising the following steps:
- a step of moving the transporter (90) until a wedging arm (21, 22, 23, 24, 31, 32, 33, 34) comes into contact with the tread of a tire,
- a step of moving the transporter along the longitudinal axis of the transporter for a predetermined distance or until a predetermined force is detected,
**characterized in that** the method further comprises:
- a step of stopping the transporter from moving and generating a signal representative of the mobility state of the vehicle (100): moving or stationary.

2. Method according to claim 1, wherein the step of stopping the movement of the transporter and of generating a signal representative of the mobility state of said vehicle is carried out according to the change in a detected force with time.

3. Method according to the preceding claim, wherein the loading of the vehicle is interrupted if the detected force disappears after said step of stopping the movement of the transporter.

4. Method according to claim 1, wherein the step of stopping the movement of the transporter and of generating a signal representative of the mobility state of said vehicle is carried out according to the change in a detected distance with time.

5. Method according to the preceding claim, wherein the loading of the vehicle is interrupted if the detected distance increases after said step of stopping the movement of the transporter.

6. Method according to claim 3 or 5, wherein a message is transmitted if loading is interrupted.

7. Electric transporter (90) for loading four-wheeled vehicles, the transporter comprising a telescopic chassis (2, 3), the chassis comprising wedging arms (21, 22, 23, 24, 31, 32, 33, 34) that are arranged so as to be positioned on either side of the tread of a wheel of the vehicle (100) to be loaded,
**characterized in that** it comprises means for detecting the presence or clamping of a vehicle wheel, which means comprise at least one sensor (46, 47, 48, 49) and a presence or clamping detection computer that collects the data from the at least one sensor and generates a signal representative of the mobility state of said vehicle according to said data.

8. Transporter according to claim 7, wherein the presence or clamping detection means comprise means for detecting the position of a wheel.

9. Transporter according to claim 7, wherein the presence or clamping detection means comprise means for detecting a force.

10. Transporter according to any of claims 7 to 9, wherein the presence or clamping detection means are arranged on the wedging arms.
